# EUROPEAN PATENT APPLICATION

(11) **EP 4 764 860 A1**
(43) Date of publication of application: **24.06.2026**
(21) Application number: 24220793.4
(22) Date of filing: 17.12.2024
(51) Int. Cl.: G06F 9/54, G06F 16/25, G06F 16/84, G06F 16/215, G06F 16/23

(54) **A SYSTEM FOR AND METHOD OF HANDLING INSTRUCTIONS FROM AN INSTRUCTION-GENERATING DOMAIN TO AN INSTRUCTION IMPLEMENTING DOMAIN**

(71) Applicant: StoneX Financial Ltd., London EC2Y 5ET (GB)
(72) Inventor: SHRIKANTH, Balajee, London, EC2Y 5ET (GB); JONES, Simon, London, EC2Y 5ET (GB)
(74) Representative: Keltie LLP

(57) **Abstract**

A computer-implemented instruction handling system for receiving a computer-implementable instruction from an instruction-generating computer in a data stream or a file stream format is described. The system is configured to extract, validate and route the instruction to a remotely-located instruction implementing computer in a format compatible with the instruction implementing computer. The system comprises: a data store storing a set of user-configurable workflows and rules for extracting, validating and routing the instruction to the instruction implementing computer; and a processor. The processor is configured by the workflows and rules to: determine a message state of the received instruction; the message state indicating a type of the instruction and any anomalies of the message which require rectification, and the degree to which the instruction has been validated; and use a specific workflow associated with the predetermined message state to: a) identify a predetermined service to be applied to the instruction in accordance with the corresponding workflow; b) retrieve and apply the service to the instruction in accordance with the workflow; c) record the results of applying the service to the instruction as feedback; d) determine if there are any more services to be applied in the specified workflow; and e) repeat Steps a) to e) until the message state of the instruction indicates that no further services are required to be applied to the instruction. The system further comprises an instruction transmitter configured to send the instruction to the instruction implementing computer in a data stream format or a file stream format compatible with the instruction implementing computer; and a message feedback engine configured to receive a response feedback message from the instruction implementing computer regarding success or failure in executing the instruction; the message feedback engine being configured to store the response feedback message; and transmit the response feedback message to the instruction generating computer.

## Description

### TECHNICAL FIELD OF THE DISCLOSURE

The present disclosure relates to a system for and method of handling instructions from an instruction-generating domain to an instruction implementing domain, and more particularly to a computer-implemented instruction handling system for receiving computer-implementable instructions in a data stream or a file stream format from one of a plurality of different instruction generating computers, and processing the instructions to extract, validate and route the instructions for delivery to a remotely-located instruction implementing system, of a corresponding one of a plurality of different instruction-implementing computers in the instruction-implementing domain.

### BACKGROUND

Information technology (IT) systems such as applications are becoming increasingly complex with distributed processing systems being configured using microservices architectures. Such system configurations enable resilience and scalability as each microservice can be scaled independently and without impacting the entire application. Further, the failure of one service does not directly affect the entire application leading to a robust IT system. Increasingly, single microservices experience high loads that are resolved by "horizontally" scaling applications wherein more microservices are added to share the load.

As IT systems are becoming more distributed, there is an increasing need to standardise common capabilities between systems, such as connectivity to distributed instruction processing systems, payment gateways and common industry networks for exchange of transaction information and automated processing. This IT integration challenge is further complicated by the need to connect IT systems within and between enterprises as well as with third-party systems e.g. vendor systems, customer systems and other business partners systems.

To accelerate digitalization and automation, products have been developed that can be readily implemented into existing IT systems to enable integration with other IT systems. However, such products lack the required support for integrating different electronic message exchange protocols into IT systems.

To facilitate electronic message exchange, the International Standards Organization (ISO) has made efforts to better define electronic messaging standards. However, there are some significant issues. Firstly, the adoption rate of such standards in organisations across the globe is poor as such system upgrades are time-consuming and require expensive resources, which are typically directed towards other means that generate immediate revenue. Secondly, messaging protocols can change and require updates to each communications channel which becomes more and more difficult as the number of different source and destination systems increases.

Generally, messages are either transferred as a data stream or as a file batch. Data streams typically contain information about a single or small number of instructions and correspond to a continuous stream of data packets over time. However, file batches, also referred to herein as file streams, are used when large amounts of data or instructions are to be transferred to a destination (e.g. in an email attachment) and correspond to one or more files grouped (bulked) together in a `batch'.

The handling of a data stream of information transmission differs from the handling of a file batch method of information transmission and hence, any system handling both types requires specific capabilities to receive the different types of information payload. Data streams operate in a manner wherein an action is triggered immediately on receipt of a data packet. However, file-based integration uses schedulers that periodically check the status (e.g. poll) of destination systems to receive files and prepare them for processing. Herein, the term 'messages' will be used to refer to both data packets and files.

The messages typically have different formats, depending on the source system that generated them and in particular on the communication protocols of the source system. Each message comprises at least the following information: a format identifier (ID) which enables identification of the format of the message, and a plurality of data fields that are each populated with different parameter values depending on the format of the message. Some of the data fields may be common across all formats of messages, whereas others may be specific to a particular message format.

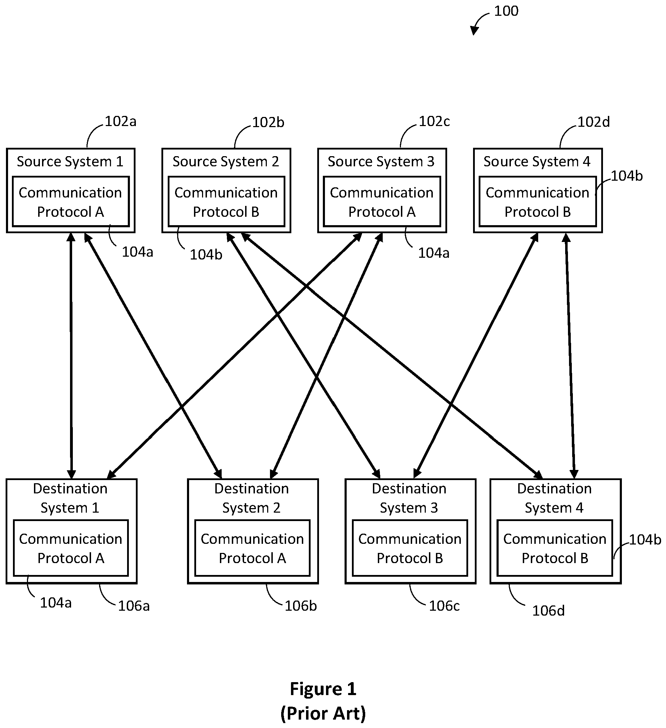

Referring now to **Figure 1****,** a basic prior art system 100 is shown for sending messages from a plurality of source systems 102a/b/c/d (instruction generating domains) over a telecommunications network to a plurality of different destination systems 106a/b/c/d (instruction processing domains or instruction implementing domains). The source and destination systems 102, 106 comprise specific communication protocols 104, each with its specific format, for generating and sending messages that can only be read (e.g. implemented) by a system with the same type of communication protocol and therefore only certain routing paths are possible. In this example, only two protocols are shown, Communication protocol A 104a and Communication protocol B 104b, for ease of understanding, though in practice there are hundreds of different protocols that have to be accommodated.

As a result, organisations have developed intermediary systems to bridge electronic message exchange between IT systems with different communication protocols. For example, to enable electronic transactions across systems located in different countries. Such intermediaries often serve to bridge specific and few types of protocols, which has resulted in IT capabilities being scattered that in turn has led to long-term maintenance and upgrade issues.

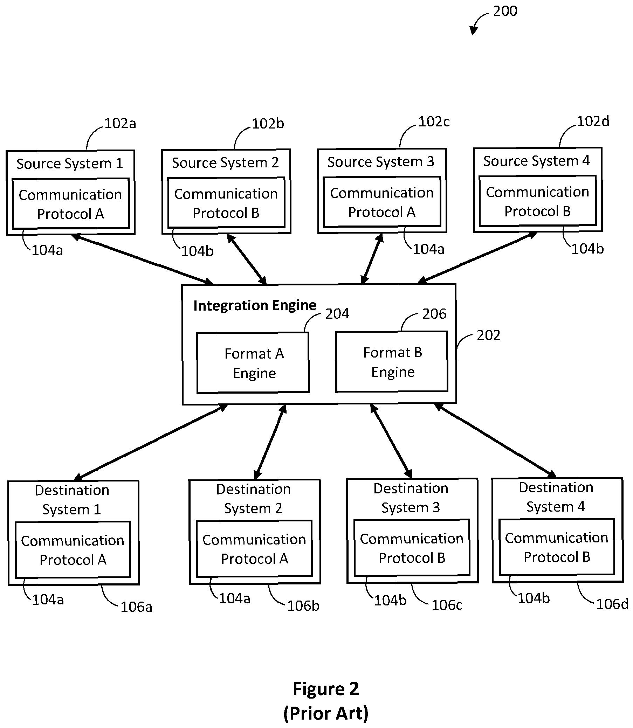

Evolution of the system 100 shown in **Figure 1** to provide such intermediary bridges between source and destination systems with different communication protocols 104, has led to prior art systems such as system 200 shown in **Figure 2****.** Here, the messages sent from a source system 102 are processed in an intermediary integration engine 202 before being sent to one or more destination systems 106. As noted above, the source systems 102 having different communication protocols 104 generate messages with different formats and therefore the integration engine 202 comprises at least two sub-systems labelled Format A Engine 204 and Format B engine 206 for processing the message formats produced by Communication Protocols A and B 104a, 104b, respectively, be delivered to the destination system 106 with the corresponding communication protocol 104. For example, the one of the sub-systems may be used to process data streams while the other sub-system is for processing file batches.

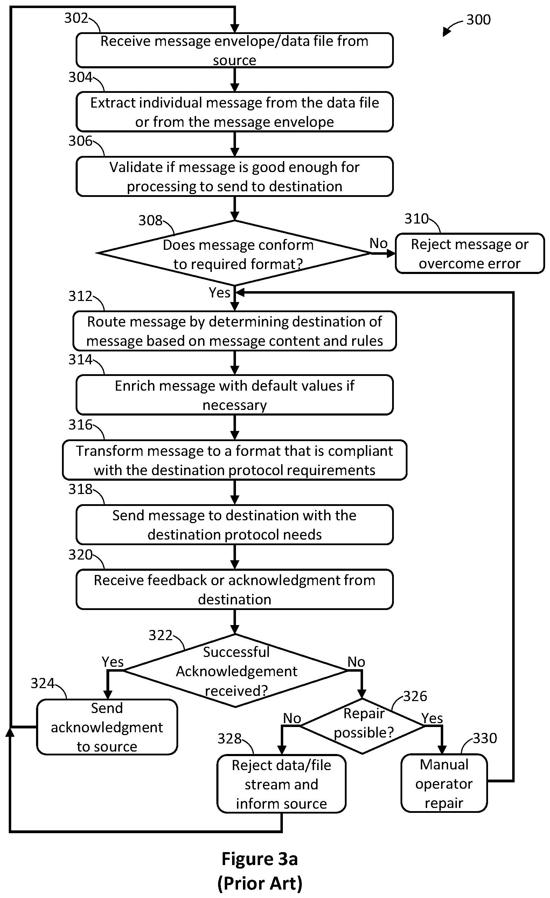

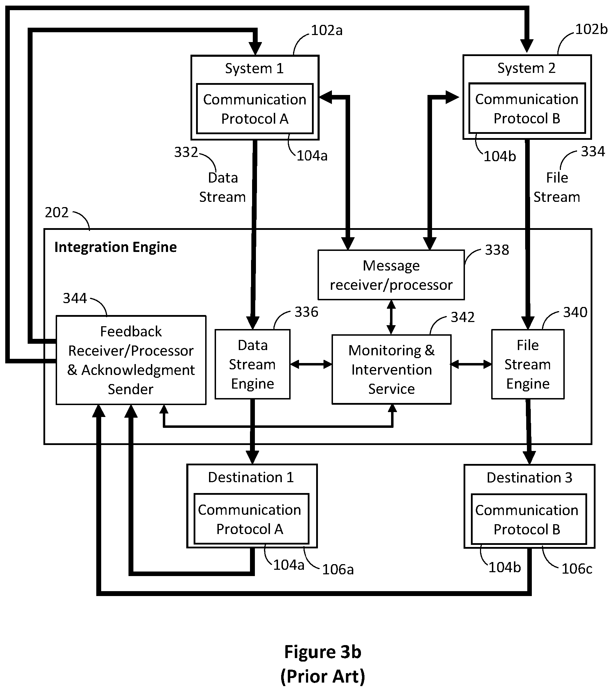

Each of the Format A and Format B engines 204, 206 generally use the method 300 shown in **Figure 3** to process a respective data stream or file stream received from a source system and deliver these streams to a destination system. A message envelope of a data stream or a data file of a file stream (e.g. file batch) is received, at Step 302, from a source system (e.g. Source Systems 102a/b/c/d). One or more individual messages (e.g. payload content) are then extracted, at Step 304, from the message envelope or data file to determine if the payload adheres to a predefined format standard required for processing. The message typically includes an instruction that needs to be processed (executed) at the destination system. A message envelope will be understood by the skilled person to comprise data fields which are populated with technical information about the message, such as the source of the message (e.g. email address of sender), the destination of the message (e.g. email address of recipient), time of sending the message, routing information, and any other data fields that may comprise technical information about the message. Further, the data fields that are included in the message envelope may depend on the communication protocols 104 of the source system 102. Typically, file and message parsers are used to extract content payload (the individual messages), and different parsers are needed to process different message formats. For example, the finance industry uses various message formats such as FIX, ISO and SWIFT and a different parser is required to process these different formats. In another example, the healthcare industry uses electronic health records to store and distribute patient information, wherein the format of an electronic health record may be different across different institutions. Therefore, a different parser is required to process these different formats when sharing the patient information between different institutions (e.g. for a specialist referral consultation).

Each message is validated, at Step 306, to check if the message is good enough for processing (e.g. check data integrity) and can be sent to the destination. The method of validation depends on a predetermined and agreed format for the message (instruction) between the source system (sender) and the destination system (receiver). The validation step ensures that bad/spurious data is discarded or corrected before being sent to the destination. If the message does not conform to the required format, at Step 308, the message can either be rejected, at Step 310, or the error can be overcome. Overcoming an error in the message (instruction) may either use manual operator intervention or predefined rules. Further, to overcome an error, the error can either be overridden, repaired or investigated manually by an operator. When the error relates to a field including an optional value that is not critical for processing the message, the operator may choose to override the error. Where the fields causing the error are critical, the operator may repair the message by correcting the values comprised in these fields. Investigation of an error (also referred to as message investigation) occurs when an operator is unable to repair the message and needs more information that can be acquired either by looking up additional information on a database or by requesting more information from the source system. If the additional information is sufficient to repair the message, the operator can then perform the repair, however if the additional information is not sufficient the operator may reject the message.

If the message conforms to the required format or has been successfully repaired, the message is then routed, at Step 312, by determining the delivery route and destination of the message based on the message content and rules comprised therein. The message routing rules help determine the particular destination system to which the message needs to be sent and are typically configured using static data. The destination route is usually determined using standardised, preset rules and are dependent on the source, message content and type of transmission. For example, in the finance industry there is a need to determine the most appropriate payment route for completing a payment in the fastest and most cost-efficient route. Determining the route comprises determining an appropriate transmission channel that the message can take and ensures that the message is delivered in a format suitable for the destination system. The message routing rules may depend on the source system, message type, message priority and other information that may be present in source message. Where there is no routing rule, there are two options available for further processing the message: (i) the message can either be rejected and returned to the source as a message of unknown type; or (ii) the route can be manually selected by an operator. In some prior art systems, the operator may also intervene where the destination system rejects the message and can choose to reroute the message to another destination.

In some scenarios, the message received from the source does not contain all the information requested by the destination. Therefore, if necessary, the message is enriched, at Step 314, with additional information required by the destination system. Missing information can be added using a set of rules or by looking up standard reference data of additional information and appending this information to the message before it is sent to the destination. The additional information therefore typically includes default values stored in a database. Examples in international instructions include determining the appropriate country codes (e.g. GB or UK) or expected date formats (e.g. dd/mm/yy or mm/dd/yyyy) that may be required for the messages to be accurately processed in the destination.

If the message format is not supported by the destination system, the message is transformed, at Step 316, to a format that is compliant with the destination protocol requirements.

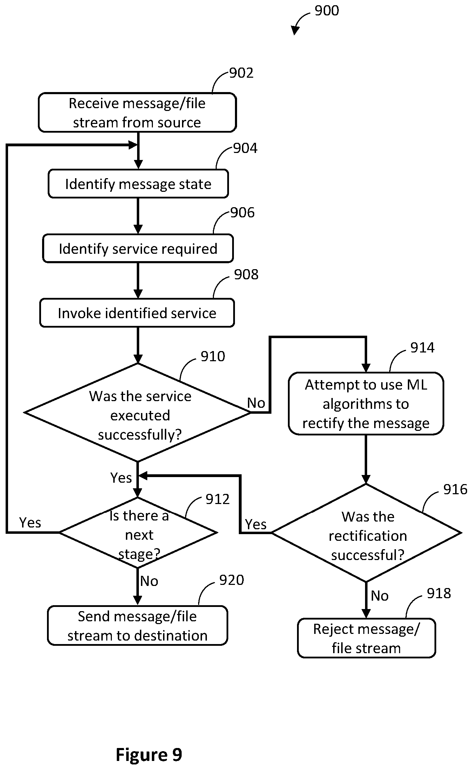

Integration engines therefore need to support multiple source and destination protocol adapters. Integration engines also need to support a variety of message formats that are received from sources in one format and may need to be delivered to a destination in a different format. Generally, if there are *"m"* incoming formats and "*n*" outgoing formats, the combination that needs to be supported is "*m* x *n*", which exponentially increases the complexity of processing, monitoring and intervention. Therefore, integration engine platforms need to define neutral format processing structures. To achieve this in an optimal fashion, the integration platforms are increasingly becoming domain specific in terms of carrying payload and support international message standards such as those set by ISO. When the core integration platform is built on such standard message standards, there is a subsequent need for format transformation both when messages are received from source systems 102 (into the standard message format), as well as when messages are delivered to destination systems 106 (out of the standard message format) **(****Figure 9****).** Furthermore, the content of the data fields (e.g. the information comprised in the data fields) may be processed differently by different destination systems 106. Therefore, integration engines also need to be able to place the information in the correct data field, wherein the correct data field is determined by the communication protocol 104a, 104b of the destination system.

Once the message has been transformed into an appropriate format (i.e. with the requirements of the destination communication protocol 104a, 104b), the message is sent, at Step 318, to the destination. Generally, the message is sent (e.g. delivered) to the destination either as part of a file batch or as part of a data stream. Additionally, the delivery of the message can either be instantaneous or can be scheduled to be sent at a later date or time. The rules for delivery are determined by the modes of message receipt and ability of the destination system to receive the message so that it can further process the message.

An acknowledgement message and/or feedback is then received, at Step 320, from the destination system. Acknowledgments confirming successfully delivery, at Step 322, are then sent, at Step 324, to the source system. However, where acknowledgements indicate unsuccessful delivery (e.g. if the destination system could not read the message), it may be possible to repair, at Step 326, the message to comply with the destination protocol requirements. If a repair is not possible, at Step 326, the message is rejected, at Step 328, and the source system is informed accordingly. If a repair is possible, at Step 326, a manual operator intervenes to repair, at Step 330, the message. Subsequently, the message is routed, at Step 312, to the destination and Steps 312 to 322 are repeated. Depending on whether the acknowledgement received, at Step 322, indicates successful delivery of the message, Steps 324 or Steps 326 to 330 are followed, as described above.

A typical integration engine 202 of the prior art is shown in **Figure 3b** as a block diagram showing the key functional features. As mentioned above, the transmission of data streams and file batches is different and therefore each of the data streams and file streams require different types of processing to be delivered to the destination system 106. Therefore, typical integration engines 202 comprise a data stream engine 336 (e.g. Format A engine 204 is a data stream engine 336) and a file stream engine 340 (e.g. Format B engine 206 is a file stream engine 340). The data stream engine 336 receives a data stream 332 from a source system, such as System 1 102a which has a Communication Protocol A 104a for delivering to a destination, such as Destination 1 106a, which also has a Communication Protocol A 104a. The data stream engine 336 processes the input data stream 332 using the method 300 described above.

One of the common challenges with building an integration engine is to ensure that no information is lost during transmission of a message (instruction), i.e. every incoming payload (e.g. data stream or file batch) must be successfully transferred to the destination system without losing any data or message content (e.g. no truncation). Generally, this is checked using a Monitoring and Intervention Service 342 and a Feedback Receiver/Processor and Acknowledgment Sender 344. The Monitoring and Intervention Service 342 is a manual operator-controlled service which is in communication with each element of the data stream engine 336 and the file stream engine 340 to provide feedback to the source systems 102 if an internal manual repair check fails or to manually pass the message to an operator to manually fix through the message receiver/processor 338. Once the messages have been delivered to the destination systems 106 in an appropriate format (e.g. either as a data stream 332 or a file stream 334), the destination systems 106 send feedback to the Feedback Receiver/Processor and Acknowledgement Sender 344, which, in turn, sends an acknowledgment back to the source systems 102. Therefore, it is the responsibility of the source system 102 to retransmit the information that was lost (e.g. dropped) due to errors.

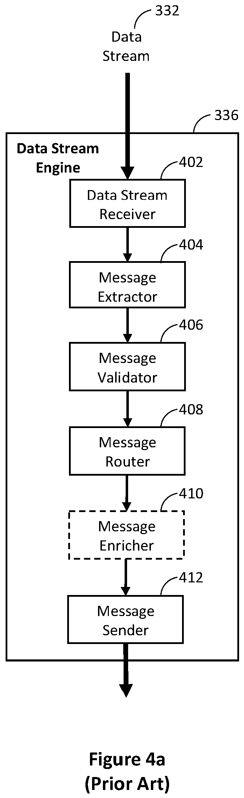

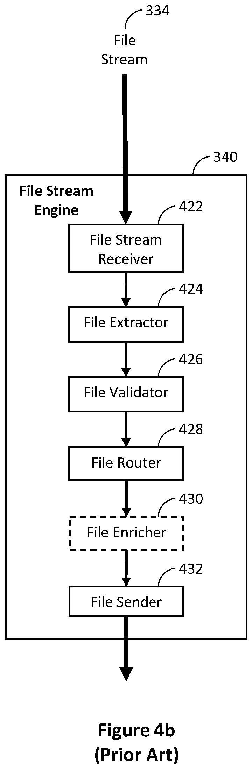

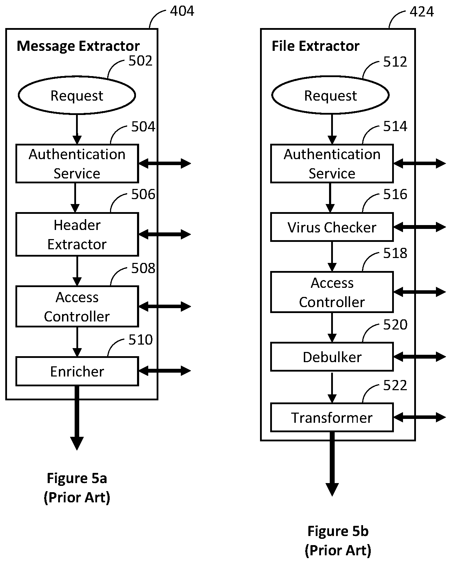

As noted above, the inherent differences between messages contained in a data stream and messages contained in a file batch require different processing techniques. For example, data streams work more on an event model where the next action is triggered immediately on the receipt of a message, while file-based integration uses schedulers that periodically poll locations to receive files and prepare them for processing. These different processing techniques have resulted in some duplicated processing capabilities in the integration engines of the prior art intermediary systems as different services (functions) are built for each stream but ultimately these services perform similar processing capabilities. Examples include extraction of the message payload, authenticating whether the sender has access to transmit the payload, and enrichment of specific fields. Processing of file batches requires additional steps such as security validations, integrity checks, virus checks and debulking the file batch into individual messages for further processing. This will further be described below in reference to **Figures 4a****,** **4b****,** **5a** and **5b**

**Figure 4a** shows a block diagram of a prior art data stream engine 336 for receiving a data stream 332, extracting the individual messages from the data stream and sending the messages to a destination 106. Specifically, data stream engines 336 generally comprise a data stream receiver 402, a message extractor 404, a message validator 406, a message router 408, an optional message enricher 410 and a message sender 412. The data stream receiver 402 receives at least one data stream 332 and passes it to the message extractor 404 to extract the individual messages therein. The extracted messages are then passed to a message validator 406 to confirm whether the destination system 106 can receive messages of the type received from the source system 102. The messages are then processed by the message router 408 to be routed to their destination. Prior to being sent to their destination, each message can be, optionally, enriched by the message enricher 410 and subsequently sent to their destination using the message sender 412.

**Figure 4b** shows a block diagram of a prior art file stream engine 340 for receiving a file stream 334, extracting the individual files from the file stream 334 and sending the files to a destination 106. The file stream engine 340 comprises a file stream receiver 422, a file extractor 424, a file validator 426, a file router 428, an optional file enricher 430 and a file sender 432. The file stream receiver 422 is configured to receive one or more file streams 334 (e.g. file batches) and pass each file stream 334 to the file extractor 424 to extract the individual files therein. The extracted files are then passed to a file validator 426 to confirm whether the destination system 106 can receive files of the type received from the source system 102. The files are then processed by the file router 428 to be routed to their destination. Prior to being sent to their destination, each file can be, optionally, enriched by the file enricher 430 and subsequently sent to their destination using the file sender 432.

**Figure 5a** shows a block diagram of the internal workings of a prior art message extractor 404. In use, the message extractor 404 receives a request 502 to process a data stream 332 that is first processed by an authentication service 504, and then subsequently by a header extractor 506 and an access controller 508, wherein each of these functions are in communication with the Monitoring and Intervention Service 342 shown in **Figure 3b****.** Once the message has been secured by the access controller, the message is passed to the enricher 510 that fills in any missing information that is required in the message by looking up standard rules and then sends the message to be validated.

Turning to **Figure 5b**,the internal workings of a prior art file extractor 424 are shown. In use, the file stream receiver 422 receives a request 412 to process a file stream 334 that is first processed by an authentication service 514, and then subsequently by a virus checker 516 and an access controller 518. The file stream 334 is then ungrouped (debulked) by a debulker 520 into individual files as described above. The files are then processed by a transformer 522 to be transformed into a format compatible with the destination system 106. Each of the functions in the file extractor 424 are in communication with the Monitoring and Intervention Service 342 described above in relation to **Figure 3b****.** Some of the message extractor 404 functions (services) are therefore duplicated in the file extractor 424.

An objective of the present disclosure is therefore to address at least one of the limitations outlined above.

### SUMMARY OF THE DISCLOSURE

According to one aspect of the disclosure there is provided a computer-implemented instruction handling system for receiving a computer-implementable instruction from an instruction-generating computer in a data stream or a file stream format, extracting, validating and routing the instruction to a remotely-located instruction implementing computer in a format compatible with the instruction implementing computer, the system comprising: a data store storing a set of user-configurable workflows and rules for extracting, validating and routing the instruction to the instruction implementing computer; and a processor, the processor being configured by the workflows and rules to: determine a message state of the received instruction; the message state indicating a type of the instruction and any anomalies of the message which require rectification, and the degree to which the instruction has been validated; use a specific workflow associated with the predetermined message state to: a) identify a predetermined service to be applied to the instruction in accordance with the corresponding workflow; b) retrieve and apply the service to the instruction in accordance with the workflow; c) record the results of applying the service to the instruction as feedback; d) determine if there are any more services to be applied in the specified workflow; and e) repeat Steps a) to e) until the message state of the instruction indicates that no further services are required to be applied to the instruction; an instruction transmitter configured to send the instruction to the instruction implementing computer in a data stream format or a file stream format compatible with the instruction implementing computer; and a message feedback engine configured to receive a response feedback message from the instruction implementing computer regarding success or failure in executing the instruction; the message feedback engine being configured to store the response feedback message; and transmit the response feedback message to the instruction generating computer.

The processor may be configured to access one of a plurality of predetermined services and the predetermined service comprises a message extraction service for extracting an instruction from an envelope or header of an instruction in a data stream format.

The processor may be configured to access one of a plurality of predetermined services and the predetermined service comprises a file extraction service for extracting an instruction from a plurality of files provided in file stream format, the file extraction service being configured to debulk the plurality of files to a single file for subsequent processing.

The processor may be configured to access one of a plurality of predetermined services and the predetermined service comprises a virus checker configured to check the instruction for any known data viruses.

The processor may be configured to access one of a plurality of predetermined services and the predetermined service comprises a validation service for validating the content of the instruction with respect to a known required format of the instruction implementing computer.

The processor may be configured to access one of a plurality of predetermined services and the predetermined service comprises a routing service for applying routing rules to the instruction, the routing rules determining the route the instruction is to be sent to the instruction implementing computer and being dependent on the source of the instruction, the content of the instruction and the type of required transmission.

The system may be configured to store knowledge regarding the format requirements of the instruction implementing computer and the predetermined service comprises a transformation service for transforming a format of the instruction, into the format known to be compatible with the instruction implementing computer.

The system may be configured to store knowledge regarding the format requirements of the instruction implementing computer; the system further comprising a transform engine for reconverting the validated instruction into the format known to be compatible with the instruction implementing computer.

The processor may be configured to access one of a plurality of predetermined services and the predetermined service comprises a common format conversion service for converting the instruction into a common format for the instruction handling system, the system further comprising a transform engine for reconverting the validated instruction in the common format into the format known to be compatible with the instruction implementing computer.

The system may be configured to store information regarding the content or format requirements of the instruction implementing computer, the processor is configured to access one of a plurality of predetermined services and the predetermined service comprises an instruction enrichment service for adding predetermined data to the instruction to ensure that the instruction meets the format or content requirements of the instruction implementing computer.

The system may further comprise a historical database for recording the results of applying the predetermined service to the instruction as feedback and for recording the response feedback message associated with a particular instruction.

The system may further comprise a trained Machine Learning Model configured to determine errors in instructions using the instructions sent to the instructing implementing computer and the feedback responses received therefrom.

The system may further comprise an instruction repairer configured to receive the output of the Machine Learning Model and correct errors in the instruction.

The Machine Learning Model may be configured to be trained on the data stored in the historical database to determine the current correct format for instructions to be implemented on the instruction implementing computer.

The Machine Learning Model may be configured to determine missing information in instructions and to provide enrichment data to the instruction enrichment service.

The system may further comprise a Workflow Designer engine configured to enable different workflows to be created on the determination of the type of service to be applied to instructions in a specific message state, the Workflow designer engine being configured to store any newly created workflows in the data store.

The system may further comprise a services connector for accessing the predetermined service from a plurality of different services stored in a services repository.

The present disclosure also extends to a computer-implemented method of handling a computer-implementable instruction received from an instruction-generating computer in a data stream or a file stream format, extracting, validating and routing the instruction to a remotely-located instruction implementing computer in a format compatible with the instruction implementing computer, the method comprising: storing a set of user-configurable workflows and rules for extracting, validating and routing the instruction to the instruction implementing computer; and using the workflows and rules to process received computer implementable instruction by: determining a message state of the received instruction; the message state indicating a type of the instruction and any anomalies of the message which require rectification, and the degree to which the instruction has been validated; using a specific workflow associated with the predetermined message state to: a) identify a predetermined service to be applied to the instruction in accordance with the corresponding workflow; b) retrieve and apply the service to the instruction in accordance with the workflow; c) record the results of applying the service to the instruction as feedback; d) determine if there are any more services to be applied in the specified workflow; and e) repeat Steps a) to e) until the message state of the instruction indicates that no further services are required to be applied to the instruction; sending the instruction to the instruction implementing computer in a data stream or a file stream format compatible with the instruction implementing computer; receiving a response feedback message from the instruction implementing computer regarding success or failure in executing the instruction; storing the response feedback message; and transmitting the response feedback message to the instruction generating computer.

The method may further comprise training a Machine Learning Model to determine errors in instructions using the instructions sent to the instructing implementing computer and the feedback responses received therefrom.

The method may further comprise manually correcting errors in the received computer instructions, storing the corrections in the data store, training a Machine Learning Model to detect and correct errors in instructions using the stored corrections and using the Machine Learning Model to detect and automatically correct errors in a subsequently processed instruction prior to sending the subsequently processed instruction to the instruction implementing computer.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
**Figure 1** is a schematic block diagram showing a basic prior art system for sending messages from source systems to destination systems with the same communication protocol;
**Figure 2** is a schematic block diagram showing another prior art system for sending messages from source systems to destination systems via an integration engine which performs operations on the messages and routes these messages appropriately, according to the protocols of the destination system;
**Figure 3a** is a flow diagram showing a method used in the prior art for sending messages from source systems to destination systems, such the systems of **Figures 1** and **2****;**
**Figure 3b** is a block diagram showing the common features of an integration engine of the prior art system, shown in **Figure 2****;**
**Figure 4a** is a block diagram showing the common features of a data stream engine of the prior art system, shown in **Figure 2****;**
**Figure 4b** is a schematic block diagram showing the common features of a file stream engine of the prior art system, shown in **Figure 2****;**
**Figure 5a** is a schematic block diagram of a message extractor used in an integration engine of the prior art system, shown in **Figure 4a****;**
**Figure 5b** is a schematic block diagram of a file extractor used in an integration engine of the prior art system, shown in **Figure 4b****;**
**Figure 6** is a schematic block diagram showing a system for sending messages from source systems to destination systems via an intelligent integration engine according to the present disclosure;
**Figure 7** is a flow diagram of a method used by the intelligent integration engine of **Figure 6** to process and deliver received messages;
**Figure 8** is a schematic block diagram showing the essential features of the intelligent integration engine of **Figure 6****;**
**Figure 9** is a flow diagram showing a method of processing a message in the intelligent integration engine of **Figure 8** using one or more services;
**Figure 10** is a flow diagram showing a method used in the extract stage of the method shown in **Figure 9****;**
**Figure 11** is a flow diagram showing a method used in the validate stage of the method shown in **Figure 9****;**
**Figure 12** is a flow diagram showing a method used in the route stage of the method shown in **Figure 9****;**
**Figure 13** is a flow diagram showing a method used in the enrich stage of the method shown in **Figure 9****;**
**Figure 14** is a flow diagram showing a method used in the deliver stage of the method shown in **Figure 9****;** and
**Figure 15** is a flow diagram showing a method used to transform a message, for example in the transform stage of the method shown in **Figure 10****.**

### DETAILED DESCRIPTION OF EXEMPLARY EMBODIMENTS

Embodiments of the present disclosure provide a computer-implemented instruction handling system, also referred to herein as an intelligent integration engine (IIE). The IIE is responsible for processing messages (i.e. messages comprising instructions) received from a plurality of different instruction generating domains (e.g. source systems 102) and delivering these messages to a remotely-located instruction-implementing domain (e.g. destination system 106) of a corresponding one of a plurality of different instruction-implementing domains. The IIE provides a unified system integration capability to support receipt of messages (e.g. electronic messages) from a plurality of sources 102 wherein each of the sources 102 may comprise a different communication protocol 104a, 104b and to process these messages using a standardised workflow such that there is improved interoperability (less rejected messages) between the source systems 102 and the destination systems 106 and preferably more efficient instruction processing (faster completion of instructions).

The integration between IT systems across different domains has evolved over time with the advent of the internet and the ability to transfer information in real time (e.g. as data streams 332) over an application programming interface (API). However, the traditional file-based transfer (e.g. as file batches 334) continues when large amounts of messages must be transferred or API's are not available. This is particularly the case when systems in different countries are considered, as the technology used in a particular country may be much olderthan that used in another country. Therefore, the IIE described herein, receives messages either as part of a data stream 332, also referred to herein as a message stream, or contained in file streams 334, also referred to herein as file batches. Data streams 332 and file batches 334 received from source systems 102 must be processed through a series of processes that extract the information (e.g. messages) and then prepare the information (e.g. payload) to be transferred to the destination system 106 in a format that is suitable for consumption (execution of instruction in the message) by the destination system 106. Despite the difference in origin of a data stream 332 and a file stream 334, a common integration workflow engine as implemented in the IIE of embodiments described herein, permits the flow of information in a consistent, efficient manner that facilitates monitoring of the information and eliminates duplication of processing capabilities. The IIE is configured as is described below such that there is improved interoperability (less rejected messages) between the source systems 102 and the destination systems 106 and, in most cases, more efficient instruction processing (faster execution of instructions as issues with format incompatibilities are overcome by the IIE).

The unification of processing the message and file streams 332, 334 is also accomplished using document centric storage models in cloud-based storage, as will be further described below. Data from message streams 332 (e.g. data streams) and file streams 334 (e.g. file batches) persisted (e.g. stored for long-term use) in cloud-based storage enables data to be accessed through web protocols such as http which unifies the processing of the data in a consistent manner using a microservices-based architecture. Therefore, the use of cloud-based storage models offers superior data resiliency and distribution options compared to systems of the prior art. Improved efficiency on the implementation of the IIE over the prior art systems is seen in the avoidance of two separate processing systems for data streams 332 and file streams 334. Rather, by using a modular system, it is possible to have a pool of functions (services) which can be constructed into workflows to handle both data streams 332 and file streams 334. The particular combination of services defines how the IIE will process the message appropriately.

Turning now to embodiments of the present disclosure, it is to be appreciated that the embodiments of the disclosure described herein are generally computer implemented and are performed by computer nodes. A node may generally be configured (e.g. operative) to perform any of the methods and functions described herein, such as the method 900 described below. A node comprises a processor, a memory and set of instructions. The memory holds instruction data (e.g. such as compiled code) representing set of instructions. The processor may be configured to communicate with the memory and to execute the set of instructions. The set of instructions, when executed by the processor, may cause the processor to perform any of the methods herein, such as the method 900 described below.

The processor (e.g. processing circuitry or logic) may be any type of processor, such as, for example, a central processing unit (CPU), a Graphics Processing Unit (GPU), a Neural Processing Unit (NPU), or any other type of processing unit. The processor may comprise one or more sub-processors, processing units, multi-core processors or modules that are configured to work together in a distributed manner to control the node in the manner described herein.

The node may comprise a memory. In some embodiments, the memory of the node can be configured to store program code or instructions that can be executed by the processor of the node to perform the functionality described herein. The memory of the node may be configured to store any data or information referred to herein, such as for example, requests, resources, information, data, signals, or similar that are described herein. The processor of the node may be configured to control the memory of the node to store such information.

In some embodiments, the node may be a virtual node, e.g. such as a virtual machine or any other containerised computer node. In such embodiments, the processor and the memory may be portions of larger processing and memory resources respectively.

It will be appreciated that a computing node may comprise other components, for example a node may comprise a power supply (e.g. mains or battery power supply). The node may further comprise a wireless transmitter and/or wireless receiver to communicate wirelessly with other computing nodes. In some embodiments, the node may have a wired connection with which to communicate with other computing nodes. In some embodiments, the node may further comprise a user input device such as a mouse, keyboard, or touch pad, for receiving input user data.

In some embodiments, the node may further comprise a display for displaying any of the data described herein, such as for example, any of the outputs (or intermediate data products) of any of the methods described herein.

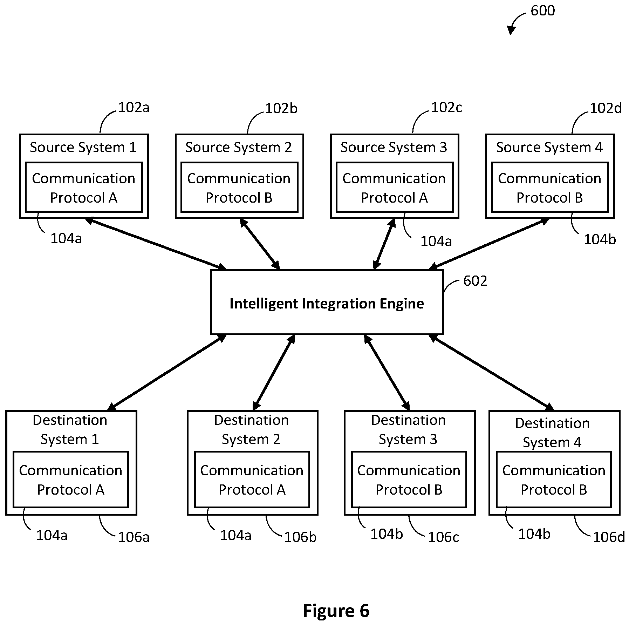

**Figure 6** shows a system 600 according to embodiments of the present disclosure. In particular, the system 600 includes an intelligent integration engine (IIE) 602 for transmitting messages between one or more source systems 102 and one or more destination systems 106.

The source system is generally located remotely to the destination system, for example in a different city or a different country, and may further be comprised in different institutions or companies. Therefore, a source system 102 (also referred to as a source) and a destination system 106 (also referred to as a destination) may each utilise a different type of communication protocol 104, as further described below. However, in some embodiments, the source and destination systems 102, 106 may comprise the same type of communication protocol 104. Furthermore, in some embodiments of the present disclosure, the source and destination systems 102, 106 may be located proximal one another, e.g. in the same room or the same building, or far from one another, e.g. in different cities or different countries.

The IIE is generally located remotely to the source and destination systems 102, 106 and is comprised in a different company or institution than the source and destination systems. Further, the IIE is advantageously configured to communicate via known communications channels including wide area networks, with a plurality of source and destination systems, and to process a plurality of message formats as further described below.

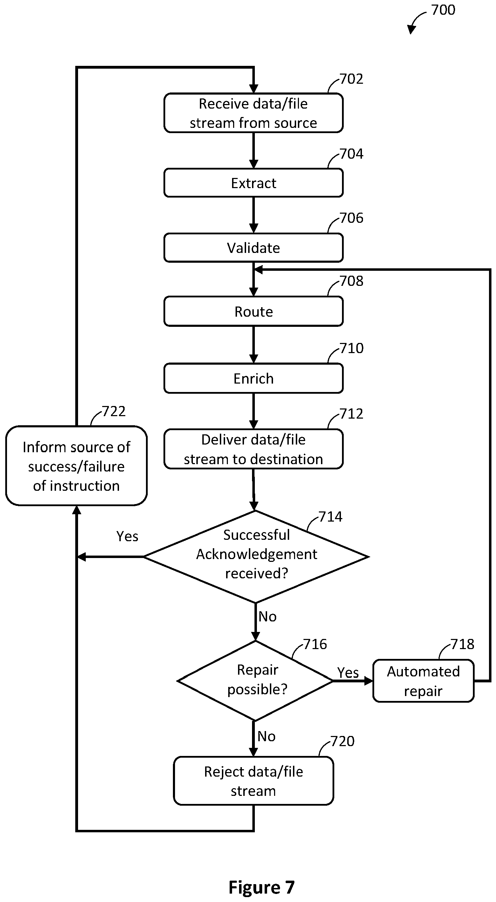

**Figure 7** shows a flow diagram of a method 700 used by the IIE 602 to process input message envelopes of a data stream 332 or data files of a file stream 334 (file batch). In a first step, the IIE 602 receives, at Step 702, a data stream 332 or file stream 334 from a source 102.

The individual messages are subsequently extracted, at Step 704, from the data stream 332 or file stream 334, respectively. For ease of the discussion, the subsequent steps of method 700 will be described in relation to individual messages. However, it will be understood that data files extracted from a file stream 332 can be processed using the same steps of method 700.

Each extracted message is then validated, at Step 706, to check (e.g. confirm) that the source and destination systems 102, 106 can send and receive, respectively, message types (e.g. formats) of the extracted message.

Subsequently, each message is routed, at Step 708, based on the routing rules comprised in the message, as described above, which may depend on the source system 102, the message type, the priority of the message, etc.

Each message received from a source 102 is then enriched, at Step 710, if required to add any information missing from the message which is information that is required by the message format of the destination 106.

Each message is then delivered, at Step 712, as part of a data stream 332 or file stream 334 to a destination 106.

If a successful instruction execution acknowledgment is received, at Step 714, at the IIE from the destination 106, the acknowledgement is sent, at Step 722, to the source 102 and Steps 702 to 714 are repeated.

If a successful acknowledgment is not received, at Step 714, and the delivery fails, the message is checked, at Step 716, to see if it is possible to automatically repair the message.

If it is possible to automatically repair the message, at Step 716, the message is automatically repaired, at Step 718.

Once repaired, the message is then re-routed, at Step 708. Steps 710 to 714 are then repeated.

If it is not possible to automatically repair, at Step 716, the message, the data stream (or file stream) containing the message (or file) is rejected, at Step 720. The source is informed, as Step 722, and then Steps 702 to 714 (and Steps 716 to 720 as appropriate) are repeated for subsequently received messages of data streams 332 and subsequently received files of file streams 334.

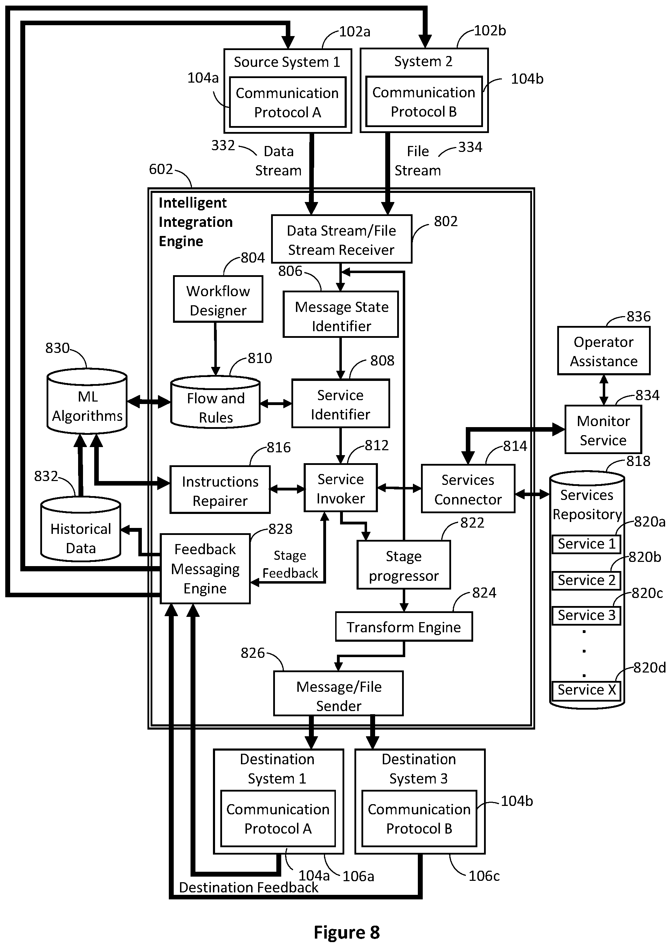

**Figure 8** shows the essential functional components of the IIE 602 for processing a data stream 332 and/or a file stream 334. An IIE 602 according to embodiments described herein comprises: a data stream/file stream receiver 802; a workflow designer 804; a message state identifier 806; a service identifier 808; a Flow and Rules data store 810; a service invoker 812; a services connector 814; an instructions repairer 816; a feedback messaging engine 828; a stage progressor 822; a transform engine 824 and a message/file sender 826.

The data stream/file stream receiver 802 receives data streams 332 and file streams 334 from different source systems e.g. Source System 1 102a and Source System 2 102b, wherein each of the source systems 102 may have a different communication protocol e.g. Communication Protocol A 104a and Communication Protocol B 104b.

The data and file streams 332, 334 are processed by a plurality of different services 820, wherein this plurality is defined using the workflow designer 804 and is referred to herein as an "integration workflow", a "workflow" or a "flow". A service is a particular processing or checking function that is carried out on the data of the message to which the service is being applied. An integration workflow may comprise at least one or more of Steps 702 to 712 of method 700 described above. The workflow designer 802 may be implemented as a graphical designer tool on a user interface, enabling a user to interact with and modify an integration workflow. For example, the user may drag and drop workflow steps to create an integration workflow. This allows for run time changes in the workflow steps, allowing for flexibility in processing different types of information payloads and message configurations.

The plurality of services 820 is stored in a services repository 818 (data store) externally to the IIE 602. New services 820 can be built independently (e.g. using a different technology, tool or programming language) to the IIE 602 and added to the services repository 818. In embodiments described herein, the services repository 818 contains at least one service 820, e.g. Service 1 820a, and may contain a plurality of services (Services 2, 3, etc. 820a/b/c/d) for processing the received messages. The services repository 818 may include technical services or domain-specific services. Technical services may include actions such as debulking, scheduling transfers etc., while domain-specific services include Steps 702 to 712 of method 700. Storing the services 820 externally to the IIE 602 enables new services 820 to be created independently without changing the IIE 602. The IIE 602 supports message standards in its core steps and therefore allows for easy integration of third-party tools and services and this saves time and cost of integration significantly.

The workflow designer 804 and the services repository 818 provide a generic modular capability to perform the task of message integration from source 102 to destination 106. As the IIE 602 comprises both a workflow designer 804 and a services repository 818 where services can be independently built and integrated, modifications can be made quickly and cost-efficiently.

The integration workflows are stored in the Flow and Rules data store 810 as flow steps (e.g. workflow steps) and rule definitions that are used by the service identifier 808 to select the appropriate service 820 to be invoked, as further described below. The Flow and Rules data store 810 is also in communication with a machine learning (ML) algorithms database that stores one or more ML algorithms 830 that can be used to modify or improve the flow steps and/or rule definitions. The ML algorithms learn from the data stored in the historical data database 832 and therefore the ability to assist in the automatic processing of different message formats, to correct errors for example, constantly improves. The term ML algorithms 830 also includes ML models (such as Large Language Models) which can be trained with the historical data stored in the historical database 832.

The skilled person will be familiar with machine learning and methods of training a model (or algorithm) using a machine learning process. But in brief, a model, which may otherwise be referred to as a machine learning model or machine learning algorithm may comprise a set of rules or (mathematical) functions that can be used to perform a task related to data input to the model. Models may be taught to perform a wide variety of tasks on input data, examples including but not limited to: determining a label for the input data; performing a transformation on the input data; making a prediction or estimation of one or more parameter values based the input data; or producing any other type of information that might be determined from the input data.

In supervised machine learning, the model learns from a set of training data comprising example inputs and corresponding ground-truth (e.g. "correct") outputs for the respective example inputs. Generally, the training process involves learning weight values of the model so as to tune the model to reproduce the ground truth output for the input data. Different machine learning processes are used to train different types of models, for example, machine learning processes such as back-propagation and gradient-descent can be used to train neural-network models.

The models herein may generally be any type of machine learning model that can be trained to take a message as an input together with the error correction information (such as in the form of examples) and when invoked rectify the errors in the message automatically. Examples include but are not limited to: neural network models, linear regression models and decision tree models.

Each input data stream 332 and file stream 334 is sent from the data stream/file stream receiver 802 to the message state identifier 806, which identifies the state of the messages contained in the data/file streams 332, 334. The state corresponds to the type of information comprised in a message that in turn determines which steps of the integration workflow are necessary for processing the message. Therefore, the state of each message determines which services 820 are necessary for processing the message. For example, if a message is missing information required by the destination system 106, an Enrich service (such as that used in Step 710 of method 700) will be required. However, if a message contains all information as required by the destination system 106 then the Enrich service is not needed. The message state identifier also assigns a specific different state based on the type of message which has been input into the data stream/file stream receiver 802. The state can thus be used to define the type of services 820 which need to be applied to process the message. For example, if the state indicates that the message is in a file stream 334, the message subsequently can be ungrouped from other messages before other services ate applied (see below).

Once the state has been identified, the service identifier 808 processes each message to identify the required services for this state using the Flow and Rules data store 810 and communicates the required services 820 to the service invoker 812.

The required services are pulled into the service invoker 812 from the services repository 818 through the services connector 814 and executed on each message. The services connector 814 is generic, thereby decoupling the IIE 602 from the design and implementation of the services 820. This service abstraction allows for implementation of certain common capabilities such as authentication, monitoring and exception handling. This then provides an ability to create a common central dashboard for managing the integration platform if required.

The services connector 814 is also in communication with a monitor service 834 that receives status messages from the services connector 814 and, if an error message is received, the operator assistance 836 may be used to rectify the error manually or alternatively the error can be corrected automatically. As such, the operator assistance 836, may comprise a human operator or a computer-implemented counterpart.

When there is a need to support dynamic integration flows, there is a need for decisioning at run-time, rather than at design time to support flexibility in routing and integration. A rules designer (not shown) supported by a rules engine (not shown), may be provided to offer operators and users the ability to change rules at any point of time by themselves without IT staff having to get involved to change software.

The success or failure of the service execution is communicated as "Stage Feedback" to the feedback messaging engine 828 for storage in a historical data database 832 or for attempted automatic repair using the instructions repairer 816. If the invoked service 820 is executed successfully, the partially-processed message is sent to the stage progressor 822 for determination of whether further processing is required. If further processing is required, such that the message needs to be sent to the next processing stage, the message is sent back to the message state identifier 806, e.g. the message having passed through the extract stage (e.g. Step 704 of method 700) needs to be sent to the validate stage (e.g. Step 706 of method 700). However, if the service execution fails (as determined by the service invoker), the instructions repairer 816 is used to correct the message.

The instructions repairer 816 is in communication with the database of ML algorithms comprising one or more machine learning algorithms 830. These algorithms may be used by the instructions repairer 816 to rectify the failure of the invoked service. These ML algorithms are continuously updated using the historical data 832, as the ML algorithms can learn how similar historical errors were rectified to enable automatic rectification for subsequent messages. Additionally, the ML algorithms can learn the format of messages which were successful transmitted and use that information to automatically correct any format differences in subsequent messages. Advantageously, the use of ML algorithms to automatically rectify an erroneous message keeps the flow of information going forward without the need for operator intervention thereby increasing the efficiency of message processing in the IIE 602 compared to the above-described prior art systems.

Once the stage progressor 822 determines that the message is in the `Deliver' stage (e.g. Step 712 of method 700), the stage progressor 822 sends the message to the transform engine 824.

The transform engine 824 transforms the message into a format compliant with the communication protocol 104 of the destination 106. The format transformations are performed by transformer software routines that depend on transformation configurations present in a transformation map or a transformation rule configuration. The traditional transformers end up signalling an error in the message if the mapping rules are unable to transform the source field to a destination value. Depending on the domain-specific needs, the failed messages can either be rejected entirely and sent back to the source 102 or be repaired by an operator before transmission to the destination 106.

The ML models described above can further be used by the service invoker 812 to improve the quality of the messages input to the transform engine 824 by learning from past errors and operator corrections. These errors and corrections are fed into an ML model which can detect similar messages that are processed by the service invoker 812 and which could fail when being transformed. Therefore, such messages may be pre-enriched using a Pre-Enrich service 820 so that the transformation process of the transform engine 824 does not fail. Examples of such improvements include but are not limited to: conversion of free text information such as names to alphanumeric codes; detection and formatting of fields to specific formats (such as telephone numbers, dates and email identification); moving information from one field of the message and placing this information in other appropriate field(s) matching a destination format, such that the transformer engine 824 converts each message without errors. Over 10% of the cross-border messages exchanged between different countries, typically fail due to bad formatting from the source 102 (mainly due to different standards in numbering schemes, dates, units of measurement etc.) and this can be eliminated through the use of ML models, such as the ML models described herein, that intercept the messages and correct them before they are input to the transform engine 824.

The successfully processed and transformed message is then processed in the message sender 826 which delivers the message to one or more destination systems 106. The message may either be delivered as part of a data stream 332 or as part of a file stream 334 as is required by the specific communication protocol 104 of the destination 106 (for example Communication Protocol B 104b for Destination System 3 106c).

The destination systems 106 subsequently send feedback messages to the feedback messaging engine 828, which in turn sends feedback messages to the source systems 102 which indicate success or failure of implementing the instruction provided in the message. The feedback messages are also stored in the historical data database 832 and help to train the ML algorithms as has been mentioned previously.

**Figure 9** shows a flow diagram of a method 900 used by the IIE 602 to process input file/data streams 332, 334. In particular, it is the method used by the IIE 602 shown in **Figure 8** to invoke one or more services 820 in each of the extract, validate, route, enrich and deliver stages (Steps 702 to 712 of method 700) to process the messages from a data stream 332 or file stream 334 and deliver the messages to a destination 106 in the format required by the communication protocol 104 of the destination system 106. In a first step, a data stream 332 or file batch 334 is received, at Step 902. The state of the message is then identified, at Step 904, and depending on the identified state, the particular service 820 required for processing that message is identified, at Step 906. The identified service 820 is subsequently invoked, at Step 908, and executed on the message.

If the service 820 was executed (e.g. invoked) successfully, at Step 910, the message is checked, at Step 912, to determine whether a subsequent service 820 is required in a next step of processing the message. However, if the service was not executed successfully, at Step 910, an attempt is made to use machine learning (ML) algorithms to rectify, at Step 914, the message automatically.

If the rectification is determined, at Step 916, to be successful, the message is checked, at Step 912, to determine whether a subsequent service 820 is required in a next stage of processing the message. However, if the rectification is determined, at Step 916, to not be successful, the message is rejected, at Step 918.

If there is a next stage as determined, at Step 912, for processing the message, the message state is next identified, at Step 904, for the subsequent stage and Steps 906 to 918 are repeated as described above. If there is no next stage as determined, at Step 912, and the message is ready to be delivered to the destination, the message is sent, at Step 920, to the destination.

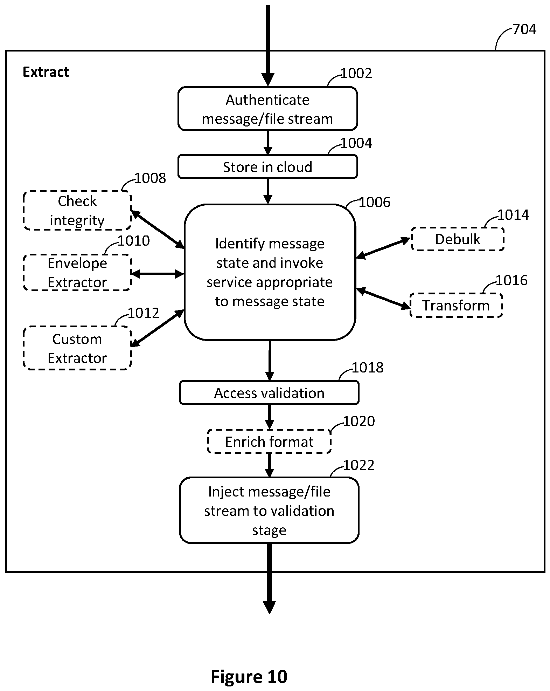

**Figure 10** shows in greater detail the steps used in method 700 to extract, at Step 704, one or more messages from a file stream 334 or a data stream 332. In particular, the message is first authenticated, at Step 1002, and then stored, at Step 1004, in a cloud-based storage. As described above, messages stored remotely on a cloud server can be accessed through various web protocols, e.g. http, which unifies the processing of messages from file streams and data streams in a consistent manner using a microservices-based architecture. The skilled person will be familiar with a microservices-based architecture as a system arrangement comprising two or more services (or microservices), wherein each service handles a different, discrete task to the other services. A discrete task will be understood as a task that does not rely on other services comprised in the system. Additionally, the use of cloud-based storage models offers higher data resiliency and distribution options.

The message state is then determined (e.g. identified), at Step 1006, and a service 820 appropriate to the message state is identified and invoked. There are various different services 820 available. For example a service 820 to check, at Step 1008, the integrity of the message can be invoked and implemented. This can involve a virus scan, decryption of the message or error detection using a checksum. This optional check integrity service 820 ensures that the information comprised in the message is complete and not corrupt and is particularly useful for file streams 334. Similarly, another service 820 which can be invoked is an envelope extractor, at Step 1010, which extracts information relevant to the message format and destination 106 from a data stream 332. A custom extractor service 820, at Step 1012, is also provided to extract information specific to a particular format of a message and this service 820 is invoked when a particular message state has been determined. Other services 820 which are also available for extraction include debulking, at Step 1014, which is useful for file stream 334 formats as information for a specific file (containing a message) needs to be extracted from information from other data files in the file stream 334. Also a transform service 820, at Step 1016, is provided for transforming of a message in a first format incompatible with the required message format of the destination 106 to a second format suitable for its destination 106.

Access validation is performed, at Step 1018, to determine whether the source and destination systems 102, 106 are allowed to send or receive the message formats of the presently processed message. If required, the format of the message is enriched, at Step 1020. This is usually an option used with data streams 332 and may involve input from the one or more ML algorithms 830. The ML algorithms 830 may be aware of recent updates in the required message format for a particular destination 106 or may have learned that a particular format of message has been accepted by the specific destination 106, such that enriching the format by providing extra fields for example, will likely result in the instruction in the message being executable at the particular destination 106. Other ways in which the data can be enriched are described later. Subsequently, the extracted message is injected, at Step 1022, to the validation stage.

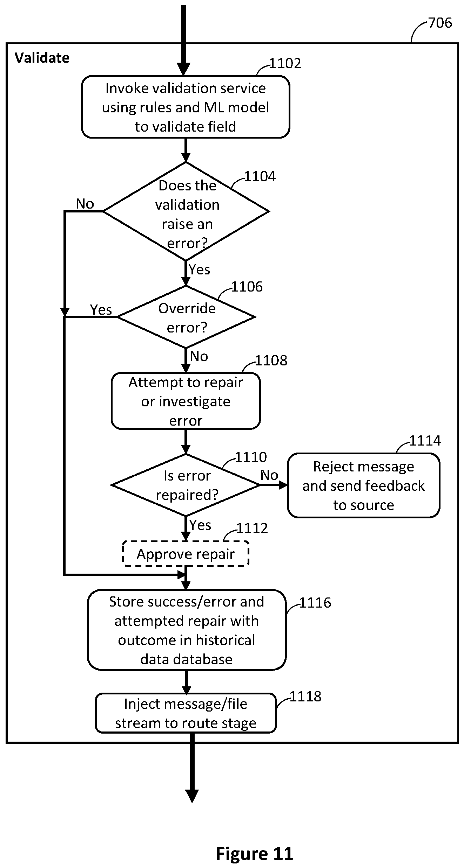

**Figure 11** shows the method used in method 700 to validate, at Step 706, the message. A service 820 is first invoked, at Step 1102, using the rules and an ML model 830 (ML algorithm) to validate a field. The validation service 820 may raise an error if a field of the message does not comply to the rules for that field or if a technical issue arises such as a software bug. If the validation does not raise an error, at Step 1104, the success of the validation is stored, at Step 1116, in the historical data database 832.

If the validation does raise an error, at Step 1104, there is an option to override the error and continue the validation. If the error is overridden, at Step 1106, the error is stored, at Step 1116, in the historical data database 832. However, if the error is not overridden, an attempt, at Step 1108, is made to repair or investigate the error. If the error is successfully repaired, at Step 1110, the repairs can be sent for approval by an administrator, at Step 1112. This step is usually used when the automated repair function is using the ML algorithms 830 initially and so there is a chance for error. However, once the system 603 has carried out several approved repairs, subsequent repairs do not need to be approved as the ML algorithms 830 will have learnt how to repair the message correctly. Similarly, no approval is required if the error correction is a simple, straightforward error correction not involving the ML algorithms 830 (for example a simple date format correction). However, if the error is not successfully repaired, at Step 1110, the message is rejected, at Step 1114, and feedback is sent to the source 102. The feedback explains what the error related to and why it could not be repaired. This provides an opportunity for the source 102 to review and amend the message such that it can be represented for processing.

Once the repair is approved, the success/error and attempted repair of the message with the outcome are stored, at Step 1116, in the historical data database 832. Subsequently, the message having been validated is injected, at Step 1118, to the route stage.

Validation of messages is performed to ensure that messages which do not conform to validation rules are not allowed to pass through to the next stage. In the prior art systems, messages that have errors are sent to an operator for review. The operator then performs one of the three actions depending on the message content and error identified. For example, the destination system 106 may require a description of why a message is being sent. A validation rule may look for alphanumeric codes that indicate to the destination system 106 how to process the message or the purpose of the message, wherein these codes are typically comprised in data fields of the message envelope. If the message envelope contains a valid description of the purpose of the instruction but does not comprise a corresponding valid purpose code, the operator might not change the message. The operator may select to override the error of no valid purpose code, and the message is then treated as valid and is allowed to be processed by the destination system 106.

In a second example, where the purpose of the instruction is described and the absent valid purpose code is deemed mandatory by the destination system 106, the operator must repair the message by adding in the appropriate purpose code. Since the operator must change the message, a subsequent approval stage is usually required wherein another operator checks and approves the changed message. The approved changed message is then processed by the destination system 106.

In a third example, where the message does not comprise a description of the purpose nor a valid purpose code, the operator cannot intervene and fix the error. Therefore, the message is either rejected or additional information is requested from the source system 102 for the message to be repaired and processed further.

The use of ML models 830 in the presently described embodiments, eliminates the need for operator intervention and proactively corrects messages that do not meet the validation rules. A ML model 830 is able learn from historical errors recorded in system logs and identifies opportunities to auto detect presence of data fields such as the above-described data fields containing the purpose description and corresponding purpose code, and any other data fields that may be required by the destination 106. There are numerous fields that may need to be detected depending on the domain-specific protocol requirements, and the ML model 830 advantageously detects the presence of such fields. These fields can include but are not limited to names, addresses, phone numbers, email identification etc. The ML model 830 translates the information detected in the data fields into machine-readable supporting information and eventually, using the fully trained ML model 830, this avoids the need for operator intervention. Additionally, the ML model 830 can be further trained based on errors observed in past message (or instruction) processing by analysing the errors from system logs. The use of ML models 830 herein therefore eliminates the need for repair and operator intervention to override errors, which increases the speed and efficiency of processing messages.

In embodiments where there is a training period and operator intervention is used to override an error, the ML model 830 learns over time as it starts to compare the proposed values with the operator override decisions. If the operator agrees with the values proposed by the ML model 830, then the confidence levels of the ML model 830 increases and once the confidence level surpasses a certain threshold the messages can be automatically processed without the need for operator override.

While the above-described example relating to an absence of the message purpose and/or corresponding code calls for a readily understandable implementation of ML models to automatically correct the message, the need for ML-powered automated message-processing becomes increasingly complex and powerful as the number of data fields that must be validated increases. For example, a financial transaction may involve a message to effect a payment that contains between 50 and 100, or more, different data fields (e.g. attributes, properties, etc.) that need validation. In another example, an electronic health record of a patient may comprise numerous data fields (e.g. demographic, medical history, billing information, laboratory tests, etc.) that must be validated. The number of combinations that need to be validated, verified and repaired is a laborious manual task that is advantageously reduced using the IIE 602 described in embodiments herein and in particular through the use of ML models 830 that progressively learn and automate message error correction for more efficient message transmission.

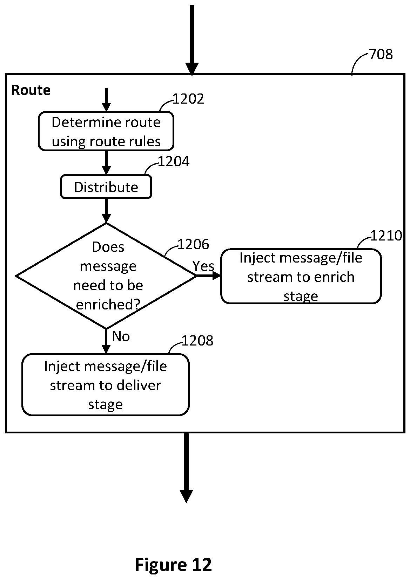

**Figure 12** shows a flow diagram of the steps used in method 700 to route, at Step 708, message. Firstly, the route is determined, at Step 1202, using the route rules stored in the Flow and Rules data store 810. The message is then distributed, at Step 1204. Sometimes the message needs to be enriched. If the message must be enriched, at Step 1206, the message is injected, at Step 1210, to the enrich stage 710. The enriching of the message is described below. However, if the message does not need to be enriched, the message is injected, at Step 1208 to the deliver stage 712.

In embodiments where the message is not processed by the destination route as it does not fulfil the conditions for processing, the message is rejected and the IIE 602 receives a negative acknowledgement indicating routing failure. Examples in the financial domain include certain types of payments not being successfully processed in a particular payment clearing system and therefore requiring another payment clearing system to be used. A further example includes a particular exchange not accepting requests for a particular instrument and therefore the message needs to be routed to a different exchange. In such cases of failure, the operator then retries the message by re-routing the message to the new destination.

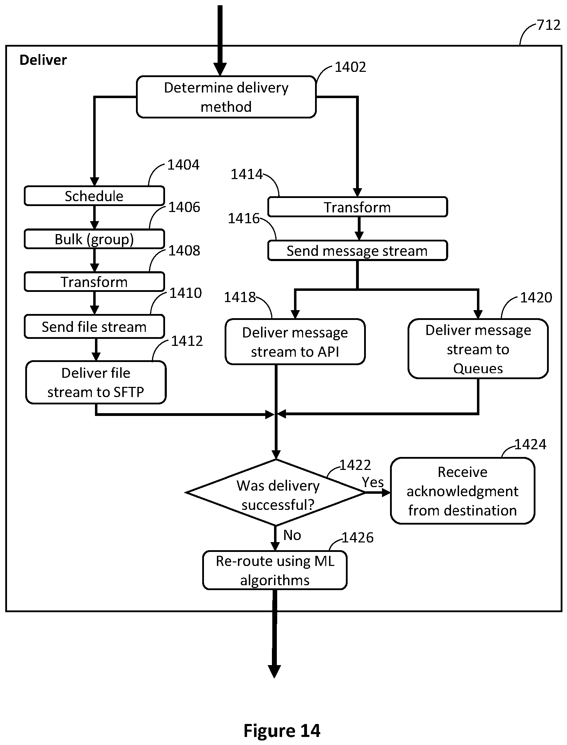

Routing decisions can be improved, and errors eliminated if the results of past failures are learnt by ML models 830 that get more intelligent over time and propose different routes that override the standard route set in the routing rules configuration (see **Figure 14**). The message routing functionality therefore gets smarter over time and can dynamically adapt to different conditions in the destinations 106. Furthermore, information about the current status of each instruction implementing computer 106 can be provided to the IIE system 602, and so it is possible for the routing to be dynamic. For example, if one instruction implementing system 106 is unable to process any further instructions (for example due to having reached maximum capacity) then it can signal to the IIE system 602 that, for a given time period, any further instructions should be re-routed to a back-up instruction implementing computer 106. This instruction can be implemented by the IIE system 602 using the feedback messaging system 828 which can then indicate this change in status to the flows and rules 810 which can then change the routing information of the relevant messages, directing them to the back-up instruction implementing computer 104. Once a message is received from the original instruction implementing computer 106 that the backlog has reduced below a certain level, the re-routing rule implemented in the IIE system 602 can be cancelled and messages sent to the original instruction implementing computer.

In the context of financial messaging, there is an ability to also determine the speed of processing a message at a particular destination at a point in time in the day/week/month/year etc (for example due to changing loads at each instruction implementing computer). Where the goal is to get the instructions processed quickly by determining the most optimal route at that point in time, the ML models 830 offer a superior capability over traditional static routing rules.

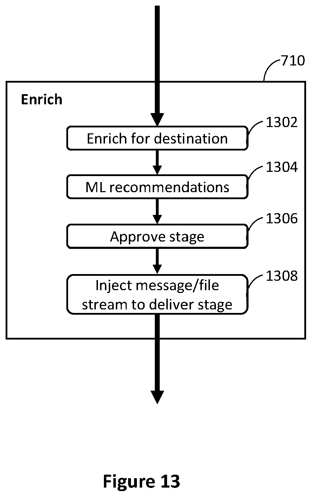

**Figure 13** shows a flow diagram of the steps used in method 700 to enrich, at Step 710, the message. The message is first enriched, at Step 1302, for the destination. ML recommendations are then used, at Step 1304, to enrich the message. As noted above, ML algorithms 830 can be used to enrich a message as ML algorithms 830 may be aware of recent updates in the required message format for a particular destination 106 or may have learned that a particular format of message has been accepted by the specific destination 106. Enriching the format may include but is not limited to providing additional data fields, changing the order of the data fields, filling in missing information from one or more data fields, and any other format changes to make the message compliant with the communication protocol 104 of the destination 106. Once enriched, the message is approved, at Step 1306. The message is then injected, at Step 1308, to the deliver stage 712.

**Figure 14** shows a flow diagram of the steps used in method 700 to deliver, at Step 710, the message. The delivery method is determined, at Step 1402. The choice of delivery method depends on whether the message to be sent as part of a file stream 334 (e.g. file batch) or a data stream 332 (e.g. message stream).

In an embodiment where the message is to be sent as part of a file stream 334, the delivery is scheduled, at Step 1404. Scheduling the delivery enables batch data processing, for example processing a file batch 334, which is generally required by destination systems that either must process large amounts of data or are configured to do so. The delivery can be scheduled for any period of time, for example latency can be a few minutes, a few hours, a few days, or any other pre-determined period of time.

The message (or file) is then bulked (e.g. grouped), at Step 1406, with other messages (or files) that are part of the file stream 334. The file stream 334 is then transformed, at Step 1408, into a format compliant with the communication protocol 104 of the destination 106. The transformed file stream 334 is then sent, at Step 1410, to the destination 106. Subsequently, the file stream 334 is delivered, at Step 1412, to a secure file transfer protocol (SFTP) to be processed by the destination system 106 i.e. the instruction comprised in the message is executed (e.g. implemented) by the instruction implementing computer 106 in the instruction implementing domain.

If the delivery of the file stream 334 is determined, at Step 1422, to be successful, an acknowledgement is received, at Step 1424, from the destination system (instruction implementing computer) 106. However, if the delivery of the file stream 334 is not successful, at Step 1422, the file stream 334 and messages (or files) comprised in the file stream 334 are re-routed, at Step 1426, using ML algorithms 830. The delivery of the file stream 334 may be unsuccessful for reasons including but not limited to network issues, connectivity issues between the instruction generating computer and the instruction implementing computer, and other issues beyond the control of the IIE 602. As noted above, ML algorithms 830 can be used to improve routing decisions as these algorithms 830 become more intelligent over time and can propose different routes that override the standard preset routes stored in the Flow and Rules data store 810. For some domains, the speed of message-processing at different destination systems can be determined for different points in time e.g. on different days, in different weeks/months/years etc. These speeds can be stored in the historical data database 832 and used by the ML algorithms 830 to determine the most optimal route at different points in time, as described above. This advantageously decreases the time from generation of the instruction to final execution of the instruction in such messages compared to when using the static routing rules of prior art systems.

In another embodiment, where the message is to be sent as part of a message stream 332 (e.g. data stream), the message is transformed, at Step 1414, into a format compliant with the communication protocols 104 of the destination 106. The message stream 332 is then sent, at Step 1416, to the destination. The message stream 332 can either be delivered to an application programming interface (API) or to a queue that holds the message stream 332 for delivery to a destination 102. Therefore, depending on the destination communication protocol 104, the message stream 332 may be delivered, at Step 1418, to an API. Alternatively, the message stream may be delivered, at Step 1420, to one or more queues. Following either Step 1418 or Step 1420, the success of the delivery is determined at Step 1422 as described above. Subsequently, Steps 1424 and/or 1426 are implemented.

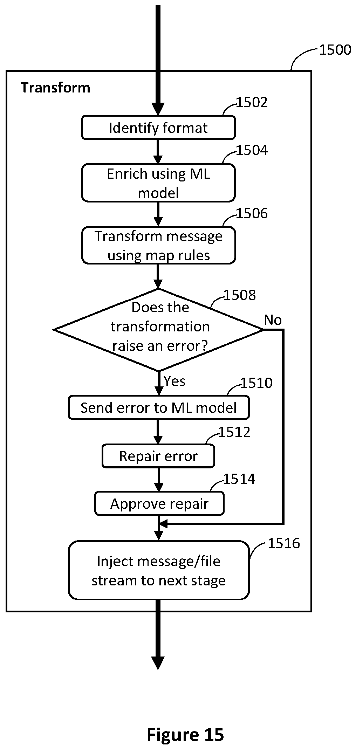

**Figure 15** is a flow diagram of a method used by the IIE 602 to transform 1500 a message into a different format. This method may be used multiple times by the IIE 602 in different stages of processing the message, for example at Step 1012 of **Figure 10** and Step 1414 of **Figure14****.** Additionally, this method is used by the transform engine 824 described above in relation to **Figure 8****.**

To transform 1500 a message, the format of the message is primarily identified, at Step 1502. The message may then need to be enriched, at Step 1504. Enrichment is required when the message received from source does not contain all information that is requested by the destination. The IIE supports enrichment of data where data that is missing in the message. That missing data can either be added using the rules stored in the Flow and Rules data store 810 or by looking up standard reference data (industry data) which may be obtained from external sources. This enrichment can also be carried out using ML models 830. In some embodiments, enrichment is performed using Step 710 of method 700 as described above in relation to **Figure 13****.**

The message is then transformed, at Step 1506, using transformation map rules as described above in relation to **Figure 8****.** If the transformation raises an error, at Step 1508, the error is sent to an ML model 830 to be repaired. The repair is subsequently approved, at Step 1514. The message is then injected, at Step 1516, into a subsequent stage e.g. from Step 1414 to Step 1416 of the deliver stage 712 described above in relation to **Figure 14****.**

If the transformation does not raise an error, at Step 1508, the message is directly injected, at Step 1516, to the next processing stage.

A non-limiting working example of an instruction handling system e.g. the IIE 602, will now be described, wherein the IIE acts as an intermediary bridge between different financial institutions. Such institutions generally accept payment instruction (messages) in the form of data streams 332 that may be time-message based or in the form of file-based secure transfers (file streams 334). Payment instructions are therefore sent from the source systems 102 i.e. the financial institutions sending the payment instructions, to the IIE 602 which processes these payment instructions for delivery to the appropriate financial instruction processing institutions (destination systems 106).

The IIE 602 therefore receives many payment instructions (messages) and processes them according to the methods described herein. Payment instructions, received as file batches 334, are first debulked to extract each data file as an individual message. This corresponds to Step 1014 of **Figure 10****.** Where payment instructions are received as data streams 332, the individual data packets are extracted as messages for further processing.

The IIE 602 then identifies the custom format of the message (see Step 1012 of **Figure 10**), as determined by the communication protocol 104 of the instruction generating computer 102, and transforms 1500 the format into an ISO standardised format (see Step 1016 of **Figure 10**) to enable the fields comprised in the message to be processed in a standardized way. The transformation is performed according to Steps 1502 to 1516 as described above in relation to **Figure 15****.** In particular, a transformation map (not shown) is used that is stored in the Flow and Rules data store 810, wherein this transformation map is designed using the workflow designer 804, for example using a drag and drop feature. This transformation map comprises the rules of transforming a particular message format into the ISO standardized format and can be easily modified to conform to a new message format that has not been previously processed by the IIE 602.

An extraction service is then used to extract the transaction fields (see Steps 1002 to 1024 of **Figure 10****)** from the transformed message and a validation service is used to apply validation rules for each of the extracted fields. The fields are validated according to Steps 1102 to 1118 described above in relation to **Figure 11****.** The validation rules are comprised in the Flow and Rules data store 810 that is in communication with the service identifier 808 to validate each of the extracted fields in real time. Validation rules support at least the validation of: a length of a field; a type of field; and conformation to industry standards. These rules can be configured (changed) by the user using a rules configuration system comprised in the workflow designer 804, which enables the rules to be easily changed in real time to adapt to changes in regulations of different countries and currencies. When the validations are unsuccessful, well-defined error codes are passed to the feedback messaging engine 828 as "Stage Feedback" to be stored as historical data 832. These error codes are then used to train the one or more of ML algorithms 830, wherein training comprises scanning past (previous) transactions and learning the corrections applied on previous messages. The trained ML algorithms 830 are then used to correct the learnt errors for subsequent messages. This eliminates the need for operator intervention and improves the efficiency of the intermediary bridge system i.e. the IIE 602. The correction applied by the appropriately trained ML algorithm 830 has an associated level of certainty, as mentioned above, and when the level is below a threshold, operator assistance 836 is invoked through the services connector 814 and the monitor service 834 coupled thereto, for review and approval of the correction. The threshold can be changed (configured) for various properties, including but not limited to different message formats, different senders, different fields, and any other property of the message that may need to conform to the communication protocols 104 of the destination computer 106.

An unencountered error that cannot be corrected by an ML algorithm 830, is passed to the operator assistance 836 for manual intervention. However, this correction when applied to the message by the operator is stored in the historical data database 832 and learnt by the one or more ML algorithms 830 for processing subsequent messages.

Once a message (payment) is validated, it is further processed according to a domain-specific workflow as created by the workflow designer 804 and stored in the Flow and Rules data store 810. The steps of the workflow (flow) may depend on one or more factors, such as the sender of the message (e.g. the communication protocols 104 of the instruction generating computer 102), the destination country, the currency of payment, and any other information that determines which services 820 are required to process the particular message. Each integration workflow stage corresponds to a microservice that performs a domain-specific sub-process. This allows easy assembly of an overall domain-specific process for a currency or country as aggregation of these services can be done as part of the workflow designer 804 tool.

Further, the integration workflow can easily be changed by an operator and in real-time while processing a message. This enables a new message format to be processed in the IIE 602 using a modified workflow. Advantageously, by amending the workflow in real-time, a message having a new format does not have to be rejected and re-sent by the source system to be re-processed using the new (amended) workflow.

An advantage of using an integration workflow, is that it provides an audit trail of the changes made to the message during processing in the IIE 602. This allows for a fully transparent processing flow and enables each step to be re-visited/assessed in events of failures or retries. This audit trail provides a valuable trace for tracking the message and providing status dashboards to the users. This dashboard allows for visibility on where in the workflow a message is currently being processed. When messages get stuck in the workflow beyond a designated time, an automated alert utility can alert operators and facilitate investigation.

As noted above, the message (payment) may need to be transformed 1500 into a format compliant with the destination. Steps 1502 to 1516 of **Figure 15** apply here as described above.

The delivery of messages (as described above in relation to **Figure 14****)** can either be as real-time messages or an accumulated set of messages in a file that is then transmitted through a secure file transfer. The integration workflow terminates in transmission of the message (payment) to the destination, which may be any country and therefore any currency.

Having described several exemplary embodiments of the present disclosure and the implementation of different functions of the system in detail, it is to be appreciated that the skilled addressee will readily be able to adapt the basic configuration of the system to carry out described functionality without requiring detailed explanation of how this would be achieved. Therefore, in the present specification, several functions of the system have been described in various places without an explanation of the required detailed implementation as this not necessary given the abilities of the skilled addressee to implement functionality into the system.

Furthermore, it will be understood that features, advantages, and functionality of the different embodiments described herein may be combined where context allows.

## Claims

1. A computer-implemented instruction handling system for receiving a computer-implementable instruction from an instruction-generating computer in a data stream or a file stream format, extracting, validating and routing the instruction to a remotely-located instruction implementing computer in a format compatible with the instruction implementing computer, the system comprising:
a data store storing a set of user-configurable workflows and rules for extracting, validating and routing the instruction to the instruction implementing computer; and
a processor, the processor being configured by the workflows and rules to:
determine a message state of the received instruction; the message state indicating a type of the instruction and any anomalies of the message which require rectification, and the degree to which the instruction has been validated;
use a specific workflow associated with the predetermined message state to:
a) identify a predetermined service to be applied to the instruction in accordance with the corresponding workflow;
b) retrieve and apply the service to the instruction in accordance with the workflow;
c) record the results of applying the service to the instruction as feedback;
d) determine if there are any more services to be applied in the specified workflow; and
e) repeat Steps a) to e) until the message state of the instruction indicates that no further services are required to be applied to the instruction;
an instruction transmitter configured to send the instruction to the instruction implementing computer in a data stream format or a file stream format compatible with the instruction implementing computer; and
a message feedback engine configured to receive a response feedback message from the instruction implementing computer regarding success or failure in executing the instruction; the message feedback engine being configured to store the response feedback message; and transmit the response feedback message to the instruction generating computer.

2. The computer-implemented instruction handling system of Claim 1, wherein the processor is configured to access one of a plurality of predetermined services and the predetermined service comprises:
a message extraction service for extracting an instruction from an envelope or header of an instruction in a data stream format; or
a file extraction service for extracting an instruction from a plurality of files provided in file stream format, the file extraction service being configured to debulk the plurality of files to a single file for subsequent processing; or
a virus checker configured to check the instruction for any known data viruses; or
a validation service for validating the content of the instruction with respect to a known required format of the instruction implementing computer
a routing service for applying routing rules to the instruction, the routing rules determining the route the instruction is to be sent to the instruction implementing computer and being dependent on the source of the instruction, the content of the instruction and the type of required transmission.

3. The computer-implemented instruction handling system of any one of Claim 1 or 2, wherein the system is configured to store knowledge regarding the format requirements of the instruction implementing computer and wherein:
the predetermined service comprises a transformation service for transforming a format of the instruction, into the format known to be compatible with the instruction implementing computer; or
the system further comprising a transform engine for reconverting the validated instruction into the format known to be compatible with the instruction implementing computer.

4. The computer-implemented instruction handling system of any one of Claim 1 or 2, wherein the processor is configured to access one of a plurality of predetermined services and the predetermined service comprises a common format conversion service for converting the instruction into a common format for the instruction handling system, the system further comprising a transform engine for reconverting the validated instruction in the common format into the format known to be compatible with the instruction implementing computer.

5. The computer-implemented instruction handling system of any one of Claims 1 to 4, wherein the system is configured to store information regarding the content or format requirements of the instruction implementing computer, the processor is configured to access one of a plurality of predetermined services and the predetermined service comprises an instruction enrichment service for adding predetermined data to the instruction to ensure that the instruction meets the format or content requirements of the instruction implementing computer.

6. The computer-implemented instruction handling system of any one of Claims 1 to 5, further comprising a historical database for recording the results of applying the predetermined service to the instruction as feedback and for recording the response feedback message associated with a particular instruction.

7. The computer-implemented instruction handling system of Claim 6, further comprising a trained Machine Learning Model configured to determine errors in instructions using the instructions sent to the instructing implementing computer and the feedback responses received therefrom.

8. The computer-implemented instruction handling system of Claim 7, further comprising an instruction repairer configured to receive the output of the Machine Learning Model and correct errors in the instruction.

9. The computer-implemented instruction handling system of Claim 7, wherein the Machine Learning Model is configured to be trained on the data stored in the historical database to determine the current correct format for instructions to be implemented on the instruction implementing computer.

10. The computer-implemented instruction handling system of any of Claims 7 to 9, wherein the Machine Learning Model is configured to determine missing information in instructions and to provide enrichment data to the instruction enrichment service.

11. The computer-implemented instruction handling system of any one of Claims 1 to 10, further comprising a Workflow Designer engine configured to enable different workflows to be created on the determination of the type of service to be applied to instructions in a specific message state, the Workflow designer engine being configured to store any newly created workflows in the data store.

12. The computer-implemented instruction handling system of any one of Claims 1 to 11, further comprising a services connector for accessing the predetermined service from a plurality of different services stored in a services repository.

13. A computer-implemented method of handling a computer-implementable instruction received from an instruction-generating computer in a data stream or a file stream format, extracting, validating and routing the instruction to a remotely-located instruction implementing computer in a format compatible with the instruction implementing computer, the method comprising:
storing a set of user-configurable workflows and rules for extracting, validating and routing the instruction to the instruction implementing computer; and
using the workflows and rules to process received computer implementable instruction by:
determining a message state of the received instruction; the message state indicating a type of the instruction and any anomalies of the message which require rectification, and the degree to which the instruction has been validated;
using a specific workflow associated with the predetermined message state to:
a) identify a predetermined service to be applied to the instruction in accordance with the corresponding workflow;
b) retrieve and apply the service to the instruction in accordance with the workflow;
c) record the results of applying the service to the instruction as feedback;
d) determine if there are any more services to be applied in the specified workflow; and
e) repeat Steps a) to e) until the message state of the instruction indicates that no further services are required to be applied to the instruction;
sending the instruction to the instruction implementing computer in a data stream or a file stream format compatible with the instruction implementing computer;
receiving a response feedback message from the instruction implementing computer regarding success or failure in executing the instruction;
storing the response feedback message; and
transmitting the response feedback message to the instruction generating computer.

14. The method of handling a computer-implementable instruction of Claim 13, further comprising training a Machine Learning Model to determine errors in instructions using the instructions sent to the instructing implementing computer and the feedback responses received therefrom.

15. The method of handling a computer-implementable instruction of Claim 13, further comprising manually correcting errors in the received computer instructions, storing the corrections in the data store, training a Machine Learning Model to detect and correct errors in instructions using the stored corrections and using the Machine Learning Model to detect and automatically correct errors in a subsequently processed instruction prior to sending the subsequently processed instruction to the instruction implementing computer.
